# EUROPEAN PATENT SPECIFICATION

(11) **EP 1 303 179 B1**
(45) Date of publication and mention of the grant of the patent: **27.06.2007**
(21) Application number: 01936474.4
(22) Date of filing: 18.05.2001
(51) Int. Cl.: A01G 23/00, B65B 27/10

(54) **DEVICE FOR BUNDLING PARTICULARLY LOGGING WASTE**
VORRICHTUNG ZUM BÜNDELN VON SCHNITTABFALL
DISPOSITIF PERMETTANT DE FORMER DES PAQUETS AVEC DES RESIDUS D'EXPLOITATION PARTICULIERS

(30) Priority: 18.05.2000 FI 20001188
(43) Date of publication of application: 23.04.2003
(73) Proprietor: Koskinen, Risto, 62900 Alajärvi (FI)
(72) Inventor: Koskinen, Risto, 62900 Alajärvi (FI)
(74) Representative: Helke, Kimmo Kalervo
(86) International application number: PCT/FI2001/000485
(87) International publication number: WO 2001/087049

(56) References cited:
- WO-A1-99/15410
- WO-A1-99/65773
- SE-C2- 511 379
- US-A- 4 633 776
- US-A- 5 377 479

## Description

The present invention relates to a device for bundling particularly logging waste, which device is intended to be attached, for example, to a forestry machine, and which device comprises the features of claim 1,

Swedish patent 511 379 discloses a device, by means of which logging waste can be formed into bundles. Bundles are considerably easier to handle than loose logging waste and take up very much less space. The device includes a feed table, onto which the logging waste is loaded, for example, by means of the loader of a forestry machine. The device itself too is intended to be attached to a forestry machine. From the feed table, the logging waste is moved forwards by means of horizontal feed rollers, by means of which the logging waste is first pushed through a kind of draw ring. The actual compression takes place by means of a grab in the device, which compresses the bundle. The grab is also arranged to move in the direction of travel of the bundle. Thus, the bundle is also pulled by the grab. The movement of the bundle stops, however, when the grab opens to change its grip and moves back to its starting point. During this return movement, the feed rollers are also stopped. Thus, the device operates in stages. In connection with the grab, a binding device is also fitted, by means of which a cord is wrapped around the bundle. Finally, the bundle is cut with a chain saw.

Due to the small size of the feed table, logging waste must be carried and fed by means of the loader, which slows the bundling. In addition, the operation in stages reduces the efficiency of the disclosed device. The operation in stages also causes peaks in the power consumption of the device, when the stopped bundle begins to be pulled again. The power required by the device comes from the forestry machine, so that the peaks in power consumption have a detrimental effect on the forestry machine and particularly on the operation of its loader. In addition to the stoppages, the bundle is also stopped during binding and cutting. In practice, the device is permanently attached to the forestry machine, so that the forestry machine cannot be used to do anything other than bundle logging waste. All in all, such a combination is inefficient and the device has a detrimental effect on the operation of the forestry machine.

US patent number 4633776 corresponds to the preamble of claim 1 and discloses a kind of bundling device, in which branchwood is compressed into a bundle by means of two sequential sets of rollers. However, the small and closely spaced rollers have a low feed and movement power. In addition, the device is intended to feed a chipper, so that if it is desired to bind and cut a bundle, separate devices must be used to do so.

The invention is intended to achieve an entirely new type of device for bundling particularly logging waste, which is more powerful and versatile than previously and which is also easier to use and by means of which the defects of the state of the art disclosed above are eliminated . The characteristic features. of the invention are stated in the accompanying Claims. The device according to the invention arranged to operate continuously, thus achieving both good efficiency and an even consumption of power. The continuous operation is achieved by means of new kinds of pressing members, by means of which the logging waste is also effectively compressed. The pressing members are, nevertheless, simple in construction and durable. In addition, the compaction achieved by means of the pressing members cannot loosen, as the binding also operates continuously and rapidly. The operation of the device is also improved by a new kind of feed table and cutting members. In addition, the device according to the invention also operates independently, so that it can be used separately from the forestry machine.

In the following, the invention is described in detail with reference to the accompanying drawings showing some embodiments of the invention, in which
- Figure 1a: shows a side view of the device according to the invention installed on a forestry machine,
- Figure 1b: shows an axonometric view of the device according to the invention detached from the forestry machine, as well as a finished bundle,
- Figure 2a: shows a side view of a diagram of the principle of the device according to the invention,
- Figure 2b: shows a top view of the device of Figure 2a,
- Figure 3: shows a rear view of the device according to the invention,
- Figure 4a: shows a side view of a diagram of the principle of a second application of the device according to the invention,
- Figure 4b: shows a top view of the device of Figure 4a.

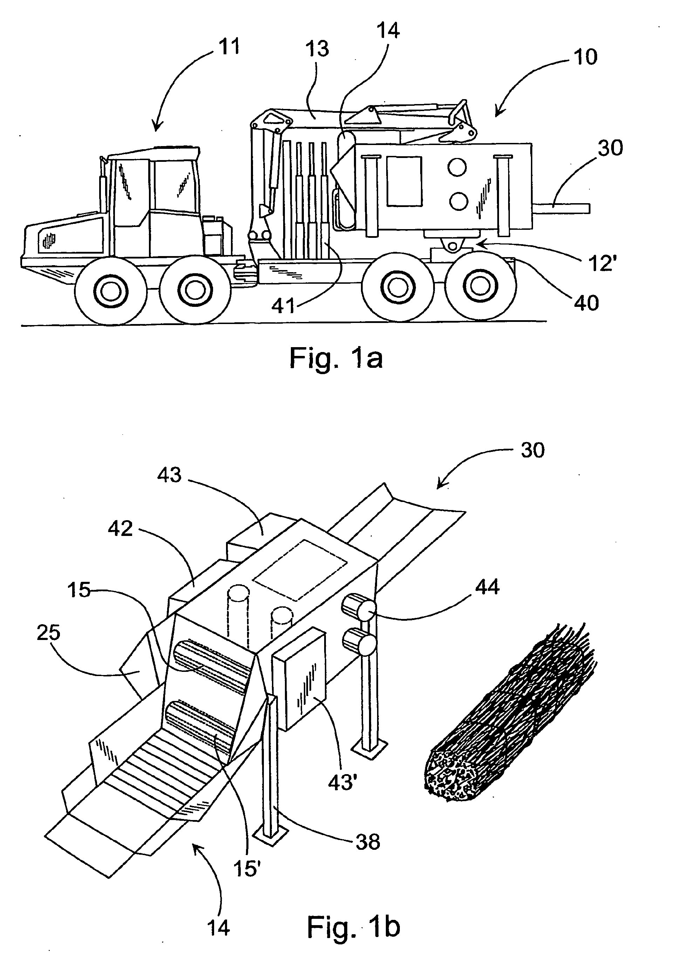

Figure 1 shows the device 10 according to the invention attached to a forestry machine 11. However, the operation of the device in no way depends of the type of forestry machine, though the forestry machine must have a suitable place to attach the device. In the device 10, there is a turntable 12' formed by an attachment member 12, by means of which the device can be rotated from one side to the other, according to each working situation. Logging waste is fed to the device 10 by means of the loader 13 of the forestry machine 11. For feeding, a feed table 14, which according to Figure 1a can be raised from the operating position to a vertical transportation position, is fitted to the frame structure 20 of the device 10. Thus, the transportation and storage length of the device is advantageously short.

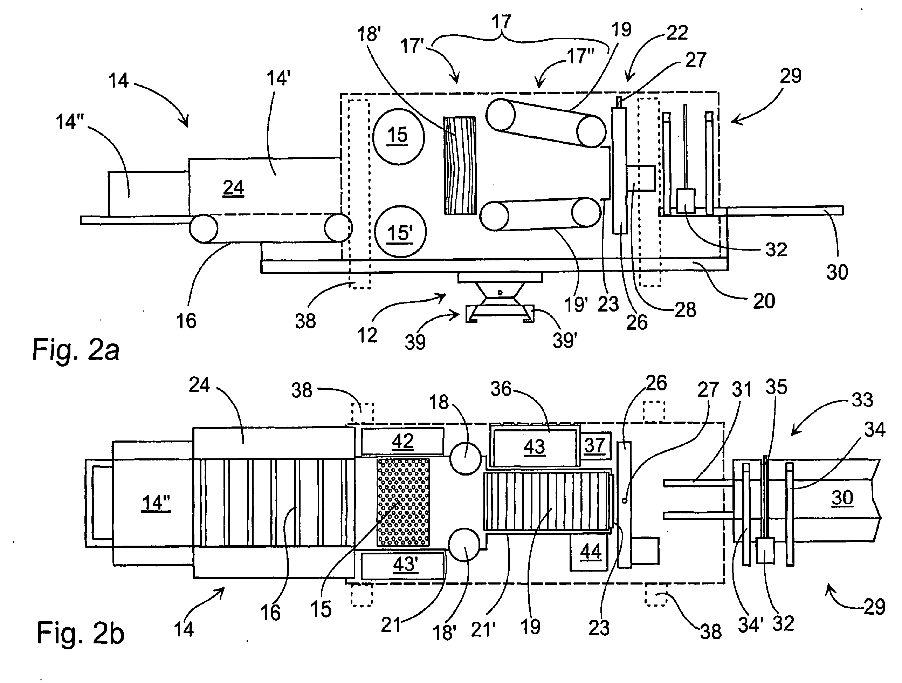

The operating principle of the device is clearly shown in Figures 2a and 2b. At the beginning of the device, there is a feed table 14, from which the logging waste that has been lifted onto it is fed forward by means of horizontally set feed rollers 15 and 15'. The feed rollers 15 and 15' have large spikes, to improve the feed efficiency. In addition, the upper feed roller 15 is arranged to be able to be moved vertically, to ensure an even feed and to prevent overloading of the feed rollers. Differing from the prior art, there is also a feed conveyor 16 in the feed table 14. In this case, the feed conveyor 16 is a twin-chain drag conveyor. Thanks to the feed conveyor, the logging waste need not be lifted and pushed towards the feed rollers by a loader, but can instead be lowered directly onto the feed table. To permit it to be turned upwards, there are suitable pivots (not shown) between the feed table 14 and the frame structure 20.

After the feed rollers 15 and 15', the construction of the device is of an entirely new kind. According to the invention, the press members 17 comprise at least two sequentially arranged sets of rollers 17' and 17". The rollers 18 and 18' that are set opposite each other in the first set of rollers 17' are arranged to compress the logging waste in one direction. Correspondingly, the rollers 19 and 19' of the second set of rollers 17" are also set opposite each other and are arranged to compress the logging waste in a direction that is essentially transverse to the first pair of rollers 18 and 18'. Thus, the logging waste is compressed effectively from different directions in sequential stages. In addition, the logging waste cannot move backwards between the compression stages, so that the finished bundle becomes tightly packed. Although its operation incorporates a form of stages, the device nevertheless operates continuously. In addition, the second set of rollers 17" forms a throat that narrows in the direction of travel of the logging waste, thus achieving effective compression while maintaining a good drive capacity in the said set of rollers 17".

According to Figures 2a and 2b, the rollers 18 and 18' of the first set of rollers 17' are arranged essentially vertically, so that they compress the logging waste laterally. The rollers 18 and 18', which are equipped with traction ribs, also push the logging waste effectively forward. Figure 2b also shows the sides 21 of the frame structure 20, which together with the rollers 18 and 18' guide the logging waste. In practice, the first rollers are arranged in openings in the sides 21. To prevent the compression slackening, the end parts 21' of the sides after the first rollers are essentially level with the said rollers 18 and 18'. Thus, the sides of the throat formed by the second set of rollers 17" are formed by the end parts 21' of the sides of the frame structure 20 that are parallel to the rollers 18 and 18' of the said first set of rollers 17'. After the first rollers 18 and 18', the second rollers 19 and 19' immediately take hold of the logging waste and compress it vertically. Powerful compression and reliable forward movement; of the logging waste are achieved by arranging the second rollers 19 and 19' to form crawler tracks. In addition, the crawler tracks extend from the first set of rollers 17' to the binding devices 22, thus preventing the logging waste from becoming caught inside the device. After the second rollers 19 and 19', there is a short, permanently fitted compression opening 23, which determines the final size of the bundle.

Immediately after the compression opening 23, there are binding devices 22, so that the bundle being formed cannot fall apart before binding.

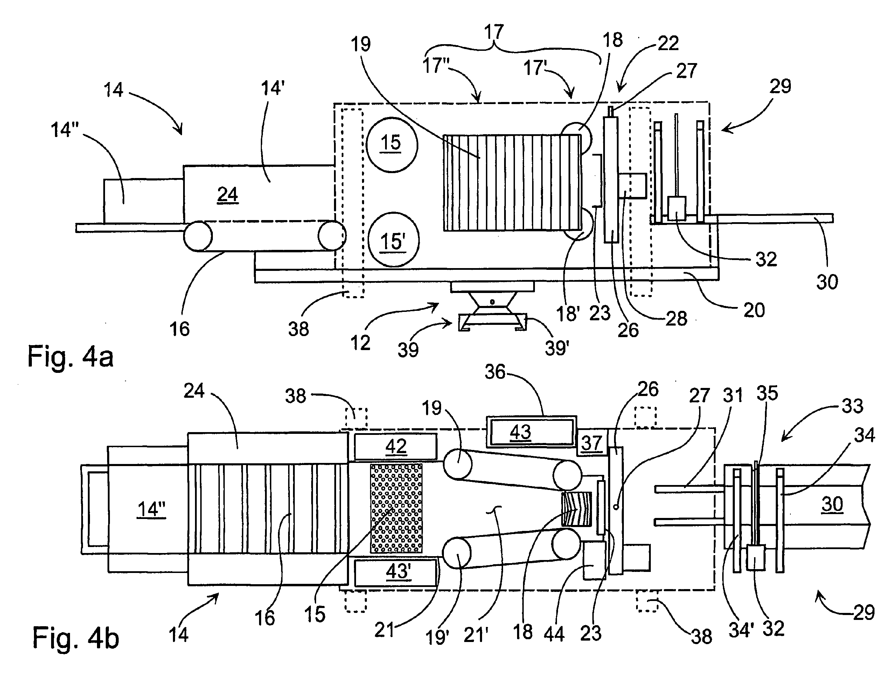

The sets of rollers can also be in a different sequence. The positioning of the rollers can also vary. This is shown in Figures 4a and 4b, in which the second set of rollers 17" is the first one in the direction of travel of th its rollers are also vertical. The same reference numbers are used for components that are functionally similar.

Also, the binding devices 22 arranged after the compression devices 17 are of a new kind. In this case, the principal component of the binding devices 22 is a feed ring 26, through which the bundle travels. The holders 27 in the feed ring 26 feeds a cord around the bundle, after wich the binding head 28 that forms part of the binding devices 22 ties off the loop that has been formed and simultaneously cuts the cord. The end of the cord remains, however, attached to the binding head 28 and at the next binding point the feed ring 26 makes a rotation in the opposite direction, while simultaneously feeding more cord. In other words with every second rotation the feed ring 26 rotates in the opposite direction, while the balls of cord remain in place in a box (not shown) placed in the device. Thanks to the new kind of binding device, binding is rapid and reliable while using as little cord as possible. During. binding, the bundle moves forward normally, or at most its speed is slightly reduced.

The cutting members 29 are also of a new kind. According to the invention, the support trough 30 and the cutting members 29 are combined to form a structure that can be moved on guides 31 in the direction of travel of the bundle. In this case, the cutting members 29 comprise a chain saw 32 and retaining claws 33, by means of which the bundle is pressed against the support trough 30 during cutting. Because the structure moves, the bundle can be cut while it is moving. After cutting, the retaining claws 33 rise upwards and the structure returns to its original position next to the binding devises 22. The cutting is extremely reliable, because the claw components 34 and 34' of the retaining claws 33 are arranged on both sides of the chain saw 32. In addition, during cutting the bundle is held firmly against the support trough 30, in which, in addition, a gap 35 is arranged in the support trough for the chain saw 32.

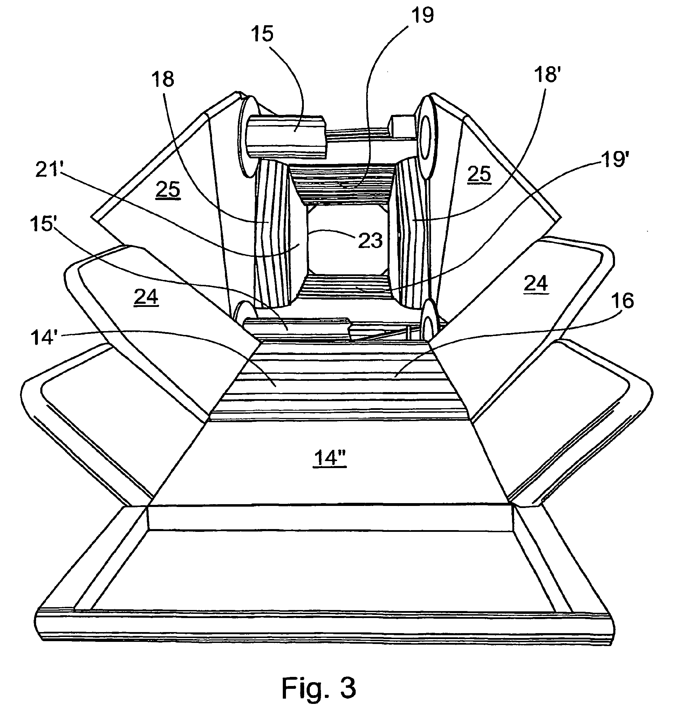

Figure 2 shows a rear view of the device in partial cross-section. In practice, the feed table 14 comprises two parts 14' and 14", the aforesaid feed conveyor 16 being in the first part 14'. In addition the sides 24 of the first part 14' can be turned to overlap on top of the feed conveyor 16, allowing the feed table 14 to be raised to the transportation position (Figure 1a). There are also pivots (not shown) between the first part 14' and the second part 14" of the feed table, so that, when the first part 14' is vertical, the second part 14" can be turned horizontally (Figure 1a) on top of the device 10. In addition, before the feed rollers 15 and 15' there are fixed guides 25, which guide and pre-compress the logging waste. After the feed rollers 15 and 15', the first rollers 18 and 18' compress laterally, after which the final compression is achieved by means of the crawler tracks 19 and 19' formed by the second set of rollers. In Figure 3, the feed rollers 15 and 15' are in partial cross-section, but the spikes are not shown. In practice, the greatest friction against the sides is precisely during the final stage of the compression. If necessary, the drive power can be increased or the friction reduced by arranging auxiliary feed rollers in the final parts 21' of the sides. Alternatively, the sides can be surfaced with plastic, which has low friction with logging waste.

Most of the operations of the device are achieved by means of hydraulic motors. Hydraulic motors are easy to control and do not cause large output peaks, particularly in a continuous-operation device. The device according to the invention has, however, its own engine, to which a hydraulic unit is connected. Both the engine and the auxiliary and control devices of the hydraulic unit are fitted to the frame structure of the device, so that the device forms a totality that is independent of the forestry machine. The device can then also be operated when detached rom the forestry machine. For this purpose the device 10 also includes hydraulic support legs 38, on which the device can be operated or stored when not in use. The installation and operation of the device is also facilitated by a quick-release attachment 39 fitted to the attachment member 12. The quick-release attachment device 39 is formed by simple catches 39', which press onto the chassis beam 40 of the forestry machine 11. The device can then be easily moved longitudinally on the forestry machine 11, in the same way as bunks 41 (Figure 1a). The attachment member 39 also has a tilt adjustment, which allows the device to be set to a suitable position.

In practice, the bundle made by the device is 3000 mm long. Due to the sequential compression and compression opening set at right angles to each other, the bundle forms a square cross-section, which facilitates the handling of the bundles. Usually, the cross-sectional dimensions of the bundle are about 500 * 500 mm. A finished bundle is shown in Figure 1b. The logging waste to be bundled at the felling site usually comprises-branches, tops, and small thinning. Logging waste is also referred to as wastewood.

One device that makes bundles of the aforesaid size has a diesel engine with a nominal output of 48 kW. The diesel engine is connected to a hydraulic pump with an output of 140 l/min The hydraulic pump drives all of the device's hydraulic motors and cylinders. The figures do not show the control and regulator systems of the engine or the hydraulic devices. In addition, electric valves and pressure sensors, for examples, are used in the device and are connected to the device' s control logic. Thus, only a thin cable need be run from the device's power distribution cabinet to the forestry machine, by means of which the device can be controlled if necessary. Control is mainly only required when starting and stopping the device and in cases of malfunction. Otherwise, the operation of the device is regulated according to the amount of logging waste being fed and to the control logic program. For example, the rotation speed of the feed rollers are regulated to feed the logging waste in a steady flow to the pressing member. The length of the bundle and the interval between the binding points can also be adjusted as desired in individual cases.

Figure 2b shows the power distribution cabinet 42 ans engine 36 on one side of the device with the fuel tank 43 on top of it. The hydraulic pump 37 is connected directly to the engine 36. On the other side is an oil tank 43' and other auxiliary devices. Figure 2b also shows one of the hydraulic motors 44 that rotate the second set of rollers 17". To save installation space, the hydraulic motors of the feed rollers and the first set of rollers are, for example, set inside the rollers.

The device according to the invention is more powerful than previously and has a simple and durable construction. The device operates independently, so that its operation does not depend on the forestry machine or its model. By means of the device, tightly-packed bundles are produced, which are durably bound, even if natural-fibre twine is used.

## Claims

1. A device for bundling particularly logging waste, which device (10) is intended to be attached, for example, to a forestry machine (11), and which device (10) includes
- a frame structure (20) with attachment members (12) for attaching the device (10) to the forestry machine (11),
- an essentially horizontal feed table (14) arranged at one end of the frame structure (20), onto which the logging waste is arranged to be fed by means of the loader (13) of the forestry machine (11),
- pressing members (17) for compressing the logging waste into a smaller volume and thus for forming a bundle, which pressing members (17) include at least two sequentially arranged sets of rollers (17', 17"), of which the opposing rollers (18, 18') of the first set of rollers (17') are arranged to compress the logging waste in one direction, and the also opposing rollers (19, 19') of the second set of rollers (17") are arranged to compress the logging waste in an essentially transverse direction in relation to the rollers (18, 18') of the first set of rollers (17'),
- binding devices (22) for the compressed bundle, which are located after the pressing members (17), and
- cutting members (29) for cutting the compressed and bound bundle to the desired length,
and the second set of rollers (17") forms a throat narrowing in the direction of travel of the bundle, the sides of which are formed by the sides (21') of the frame structure (20) that are parallel to the rollers (18, 18') of the first set of rollers (17'), **characterized in that** the device (10) further includes
- opposing feed rollers (15, 15') arranged essentially horizontally after the feed table (14) but before the pressing members (17), and
- a support trough (30) at the other end of the frame structure (20) for supporting the bundle during binding and cutting, and the rollers (19, 19') of the second set of rollers (17") are arranged as crawler tracks, which are arranged to form the said narrowing throat.

2. A device according to Claim 1, **characterized in that** the rollers (18, 18') of the first set of rollers (17') are arranged essentially vertically and level with the said sides (21') of the frame structure (20).

3. A device according to Claim 1, **characterized in that** the rollers (19, 19') of the second set of rollers (17") are arranged essentially vertically.

4. A device according to any of Claims 1 - 3, **characterized in that** there are pivots between the feed table (14) and the frame structure (20) for turning the feed table (14) from the operating position to a vertical transportation position, when a feed conveyor (16) is arranged in the feed table (14).

5. A device according to any of Claims 1 - 4, **characterized in that** the binding devices (22) are formed of a feed ring (26) and a binding head (28), which is arranged to bind a loop formed by the bundle by the feed ring (26) and cut the cord, the cut end remaining attached to the binding head (28).

6. A device according to any of Claims 1 - 5, **characterized in that** the cutting members (29) and the support trough (30) are arranged as a single structure, which is supported by guides (31) in the frame structure (20) to be moved in the direction of the bundle.

7. A device according to Claim 6, **characterized in that** the said structure includes retaining claws (33) for pressing the bundle against the support trough (30) when the bundle is cut, the retaining claws (33) comprising two claw components (34, 34), which are arranged on each side of the chain saw (32) forming the cutting members (29).

8. A device according to any of Claims 1 - 7, **characterized in that** quick-release devices (39') and a tilt-adjustment device are fitted to the attachment members (12).

9. A device according to any of Claims 1 - 8, **characterized in that** the device (10) includes its own engine (36) with auxiliary devices, a hydraulic unit (37) connected to engine (36) with a hydraulic fluid reservoir (43'), and their control and adjustment devices (42), so that a device that can be operated independently of the forestry machine (11) is formed.

10. A device according to any of Claims 1 - 9, **characterized in that** support legs (38) are fitted to the frame structure (20), for storing or operating the device (10) when it is detached from the forestry machine (11).

## Patentansprüche

1. Speziell zum Bündeln von Schlagabraum dienendes Gerät (10), das zum Beispiel zur Befestigung auf einer Forstmaschine (11) bestimmt ist, und das
- eine Rahmenkonstruktion (20) und daran angeordnete Befestigungselemente (12) zum Befestigen des Geräts (10) auf der Forstmaschine (11),
- einen an einem Ende der Rahmenkonstruktion (20) im Wesentlichen waagrecht angeordneten Aufgabetisch (14), auf den der Schlagabraum mit dem Lader (13) der Forstmaschine (11) aufgebracht wird,
- Auf Vorschubrollen (15, 15') folgende Presselemente (17) zum Zusammenpressen des Schlagabraums auf ein kleineres Volumen und damit zur Bildung eines Bündels, wobei die Presselemente (17) wenigstens zwei hintereinander angeordnete Walzensätze (17', 17") umfassen, von denen die einander gegenüberliegend angeordneten Walzen (18, 18') des ersten Walzensatzes (17') dazu eingerichtet sind, den Schlagabraum in einer Richtung zu pressen und die gleichfalls einander gegenüberliegend angeordneten Walzen (19, 19') des zweiten Walzensatzes (17 ") dazu eingerichtet sind, den Schlagabraum im Wesentlichen quer zu den Walzen (18, 18') des ersten Walzensatzes (17') zu pressen,
- einen zum Binden des verdichteten Bündels dienenden Binder (22), der hinter den Presselementen (17) angeordnet ist, und
- Trennelemente (29) zum Ablängen des gepressten und gebundenen Bündels auf die gewünschte Länge umfasst, und bei dem der zweite Walzensatz (17") einen sich in Laufrichtung des Bündels verengenden Schlund bildet, dessen Seiten von den in Richtung der Walzen (18, 18') des ersten Walzensatzes (17') verlaufenden Wänden (21') der Rahmenkonstruktion (20) gebildet werden, **dadurch gekennzeichnet, dass** das Gerät (10) außerdem
- hinter dem Aufgabetisch (14), aber vor den Presselementen (17) im Wesentlichen waagrecht und einander gegenüberliegend angeordnete Vorschubrollen (15, 15'), und
- am anderen Ende der Rahmenkonstruktion (20) eine Stützmulde (30) zum Abstützen des Bündels beim Binden und Durchtrennen umfasst, und die Walzen (19, 19') des zweiten Walzensatzes (17'') in Form von Raupenketten angeordnet sind und den besagten sich verengenden Schlund bilden.

2. Gerät nach Anspruch 1, **dadurch gekennzeichnet, dass** die Walzen (18, 18') des ersten Walzensatzes (17') im Wesentlichen vertikal und bündig mit den besagten Wänden (21') der Rahmenkonstruktion (20) angeordnet sind.

3. Gerät nach Anspruch 1, **dadurch gekennzeichnet, dass** die Walzen (19, 19') des zweiten Walzensatzes (17'') im Wesentlichen vertikal angeordnet sind.

4. Gerät nach irgendeinem der Ansprüche 1 bis 3, **dadurch gekennzeichnet, dass** zwischen dem Aufgabetisch (14) und der Rahmenkonstruktion (20) Gelenke zum Schwenken des Aufgabetischs (14) aus seiner Betriebsstellung in vertikale Transportstellung vorhanden sind, wobei der Aufgabetisch (14) mit einem Aufgabeförderer (16) versehen ist.

5. Gerät nach irgendeinem der Ansprüche 1 bis 4, **dadurch gekennzeichnet, dass** der Binder (22) aus einem Zuführring (26) und einem Bindekopf (28) besteht, der dazu dient, die vom Zuführring (26) um das Bündel gelegte Schlaufe zu binden und den Bindfaden zu durchtrennen, wobei das durchtrennte Bindfadenende am Bindekopf (28) bleibt.

6. Gerät nach irgendeinem der Ansprüche 1 bis 5, **dadurch gekennzeichnet, dass** die Trennelemente (29) und die Stützmulde (30) eine einheitliche Konstruktion bilden, die, über Führungen (31) an der Rahmenkonstruktion (20) abgestützt, in Laufrichtung des Bündels beweglich ist.

7. Gerät nach Anspruch 6, **dadurch gekennzeichnet, dass** die besagte Konstruktion auch Haltepratzen (33) zum Drücken des Bündels gegen die Stützmulde (30) beim Durchtrennen des Bündels hat, wobei die Haltepratzen (33) zwei Pratzenelemente (34, 34') umfassen, die beiderseits der die Trennelemente (29) bildenden Kettensäge (32) angeordnet sind.

8. Gerät nach irgendeinem der Ansprüche 1 bis 7, **dadurch gekennzeichnet, dass** die Befestigungselemente (12) mit Schnellkupplungsmitteln (39') und Neigungseinstellung versehen sind.

9. Gerät nach irgendeinem der Ansprüche 1 bis 8, **dadurch gekennzeichnet, dass** das Gerät (10) einen eigenen Motor (36) einschließlich Hilfsvorrichtungen, eine an den Motor angeschlossene Hydraulikanlage (37) einschließlich Hydraulikflüssigkeitstank (43') sowie deren Steuer- und Regelvorrichtungen (42) hat, sodass es eine von der Forstmaschine (11) unabhängige, selbständig einsetzbare Einheit bildet.

10. Gerät nach irgendeinem der Ansprüche 1 bis 9, **dadurch gekennzeichnet, dass** an der Rahmenkonstruktion (20) Stützfüße (38) zum Aufbewahren des Geräts (10) oder zu seinem Einsatz getrennt von der Forstmaschine (11) angeordnet sind.

## Revendications

1. Dispositif pour mettre en faisceaux en particulier les déchets d'exploitation forestière d'abattage et de débusquage, lequel dispositif (10) est prévu pour être joint, par exemple, à une moissonneuse forestière (11), et lequel dispositif (10) inclut
- une structure d'armature (20) avec des membres d'attachement (12) pour attacher le dispositif (10) à la moissonneuse forestière (11),
- un plateau d'alimentation essentiellement horizontal (14) disposé à une extrémité de la structure d'armature (20), sur lequel les déchets d'abattage et de débusquage sont déversés au moyen de la grue de chargement (13) de la moissonneuse forestière (11),
- les éléments de serrage (17) en aval des rouleaux d'alimentation (15, 15') pour comprimer les déchets d'abattage et de débusquage dans un volume réduit et former ainsi un faisceau, lesquels éléments de serrage (17) incluent au moins deux ensembles de rouleaux successifs (17', 17"), parmi lesquels les rouleaux en vis-à-vis (18, 18') du premier ensemble de rouleaux (17') sont conçus pour comprimer les déchets d'abattage dans un sens, et les rouleaux (19, 19') du deuxième ensemble de rouleaux (17"), également disposés en vis-à-vis, sont conçus pour comprimer les déchets dans un sens essentiellement transversal par rapport aux rouleaux (18, 18') du premier ensemble de rouleaux (17')
- des dispositifs de cerclage (22) du faisceau comprimé situés en aval des éléments de serrage (17), et
- des membres de coupe (29) pour couper le faisceau comprimé et cerclé à la longueur désirée,
et le deuxième ensemble de rouleaux (17") forme une gorge se rétrécissant dans la direction de déplacement du faisceau, gorge dont les côtés sont constitués par les parois (21') de la structure d'armature (20) parallèles aux rouleaux (18, 18') du premier ensemble de rouleaux (17'), **caractérisé en ce que** le dispositif (10) inclut de plus
- les rouleaux d'alimentation en vis-à-vis (15, 15') disposés essentiellement horizontalement en aval du plateau d'alimentation (14) mais en amont des éléments de serrage (17), et
- une goulotte de soutien (30) à l'autre extrémité de la structure d'armature (20) pour soutenir le faisceau pendant le cerclage et la coupe, et que les rouleaux (19, 19') du deuxième ensemble de rouleaux (17") sont disposés en chenilles conçues pour former ladite gorge de rétrécissement.

2. Dispositif selon la revendication 1, **caractérisé en ce que** les rouleaux (18, 18') du premier ensemble de rouleaux (17') sont disposés essentiellement verticalement et au même niveau que lesdites parois (21') de la structure d'armature (20).

3. Dispositif selon la revendication 1, **caractérisé en ce que** les rouleaux (19, 19') du deuxième ensemble de rouleaux (17") sont disposés essentiellement verticalement.

4. Dispositif selon l'une quelconque des revendications 1 - 3, **caractérisé en ce que**, entre le plateau d'alimentation (14) et la structure d'armature (20), se trouvent des articulations servant à faire pivoter le plateau d'alimentation (14) de la position de fonctionnement dans la position verticale de transport, quand un convoyeur d'alimentation (16) est fixé au plateau d'alimentation (14).

5. Dispositif selon l'une quelconque des revendications 1 - 4, **caractérisé en ce que** les dispositifs de cerclage (22) sont constitués d'un anneau d'alimentation (26) et d'une extrémité de cerclage (28), qui est conçue pour lier la boucle formée autour du faisceau de l'anneau d'alimentation (26) et pour couper la corde, l'extrémité coupée restant fixée à l'extrémité de cerclage (28).

6. Dispositif selon l'une quelconque des revendications 1 - 5, **caractérisé en ce que** les éléments de coupe (29) et la goulotte de soutien (30) sont conçus comme une structure unique, soutenue par des guides (31) dans la structure d'armature (20) pour déplacer ladite structure dans la direction du faisceau.

7. Dispositif selon la revendication 6, **caractérisé en ce que** ladite structure inclut des griffes de retenue (33) pour appuyer le faisceau contre la goulotte de soutien (30) quand le faisceau est coupé, lesquelles griffes de retenue (33) comportent deux éléments de griffe (34, 34'), qui sont disposés de chaque côté de la scie à chaînes (32) formant les éléments de coupe (29).

8. Dispositif selon l'une quelconque des revendications 1 - 7, **caractérisé en ce que** sur les éléments d'attache (12) sont fixés des dispositifs de fixation rapide (39') et un dispositif de réglage de l'inclinaison.

9. Dispositif selon l'une quelconque des revendications 1 - 8, **caractérisé en ce que** le dispositif (10) inclut son propre moteur (36) avec ses dispositifs auxiliaires, une unité hydraulique (37) reliée au moteur (36) avec son réservoir de fluide hydraulique (43'), et dispositifs de commande et de réglage (42) de ceux-ci, de sorte que l'ensemble forme un dispositif autonome pouvant être actionné indépendamment de la moissonneuse forestière (11).

10. Dispositif selon l'une quelconque des revendications 1 - 9, **caractérisé en ce que** des pieds de soutien (38) sont adaptés à la structure d'armature (20), pour le stockage du dispositif (10) ou son utilisation séparément de la moissonneuse forestière (11).
